# EUROPÄISCHE PATENTSCHRIFT

(11) **EP 0 673 179 B1**
(45) Veröffentlichungstag und Bekanntmachung des Hinweises auf die Patenterteilung: **25.08.1999**
(21) Anmeldenummer: 95101971.0
(22) Anmeldetag: 14.02.1995
(51) Int. Cl.: H04Q 11/04

(54) **Netzabschlusseinrichtung eines Telekommunikationsnetzes**
Telecommunications network termination
Terminal de réseau de télécommunication

(30) Priorität: 17.02.1994 DE 4405038
(43) Veröffentlichungstag der Anmeldung: 20.09.1995
(73) Patentinhaber: ALCATEL, 75008 Paris (FR)
(72) Erfinder: Doll, Reinhard, D-71229 Leonberg (DE); Schmoll, Siegfried, D-71282 Hemmingen (DE); Ohl, Wolf, D-70825 Korntal (DE)
(74) Vertreter: Schätzle, Albin, Dipl.-Phys.

(56) Entgegenhaltungen:
- EP-A- 0 454 247
- US-A- 5 210 741
- GLOBECOM'90, SESSION 705A, PAPER 2, Bd. 2, 2.Dezember 1990 SAN DIEGO, US, Seiten 1-4, M.L.MIJARES ET AL. 'Deploying ISDN in a Constrained Pre-Standard Environment'
- ERICSSON REVIEW, Bd. 61, Mai 1984 STOCKHOLM, SE, Seiten 34-41, A.RUDBERG ET AL. 'Planning of ISDN'
- PROCEEDINGS OF THE NATIONAL COMMUNICATIONS FORUM, Bd. 43, Nr. 2/4, Oktober 1989 CHICAGO, US, Seiten 416-426, XP 000220397 L.D. LYNDQUIST 'Basics of protocols: Terminology, Use and Meaning'
- BRITISH TELECOMMUNICATIONS ENGINEERING, Bd. 10, Nr. 1, April 1991 LONDON GB, Seiten 26-33, XP 000243340 P.H.LISLE ET AL. 'Exploiting the Copper Network'

## Beschreibung

Die Erfindung betrifft eine Netzabschlußeinrichtung eines Telekommmunikationsnetzes.

In dem Buch "Grundlagen der Vermittlungstechnik" (1991), von G. Siegmund, ist auf Seite 166 die Basisanschlußkonfiguration für ein diensteintegrierendes digitales Netz (ISDN) beschrieben. Dabei ist eine Endstelle über einen Netzabschluß mit dem diensteintegrierenden digitalen Netz verbunden. Der Netzabschluß hat teilnehmerseitig eine S_{O}-Schnittstelle und netzseitig eine U_{KO}-Schnittstelle. Netzseitig und teilnehmerseitig werden Informationen im Zeitmultiplexverfahren jeweils in einer Rahmenstruktur übertragen. Beide Rahmenstrukturen enthalten jeweils zwei B-Kanäle (64kbit/s) und einen D-Kanal (16 kbit/s). Die Basisanschlußkonfiguration ist eine starre Konfiguration, da sie jeder Endstelle die gleiche Übertragungskapazität, nämlich 2 x 64 kbit/s + 1 x 16 kbit/s zur Verfügung stellt.

In der Druckschrift DE 41 24 118 Al ist ein Fernmeldekonzept mit einer Konzentration von acht Analogteilnehmern auf einen ISDN-Basisanschluß beschrieben. Die acht Analogteilnehmer sind über einen Multiplexer an den ISDN-Basisanschluß angeschlossen. Gesteuert über eine Vermittlungstechnik können jeweils nur zwei der acht Analogteilnehmer gleichzeitig Informationen über die beiden B-Kanäle des ISDN-Basisanschlusses übertragen. Es handelt sich hierbei um ein starres Konzept, das jedem Teilnehmer die gleiche Übertragungskapazität zur Verfügung stellt und außerdem auf analoge Teilnehmer beschränkt ist.

In EP 0 454 247 ist eine Zwischeneinheit offenbart, die zur Anschaltung einer Endstelle über eine S₀-Schnittstelle an ein diensteintegrierendes digitales Nachrichtennetz dient. Die Zwischeneinheit beinhaltet eine teilnehmerseitige S₀-Schnittstelle und eine Steuerschaltung sowie ein Koppelfeld. Die Steuerschaltung dient dazu, über das Koppelfeld vermittlungstechnische Funktionen durchzuführen, beispielsweise interne Verbindungen zwischen Endgeräten in der Endstelle zu schalten. Das Vermitteln der Verbindungen ist variabel gestaltet. Die Steuerschaltung ist für den Aufbau von Verbindungen und die Zuweisung von B-Kanälen zwischen zwei Endgeräten oder die Anforderung einer Verbindung von einem Endgerät zur Vermittlungsstelle 2 zuständig. Von einer Gruppe von Endgeräten können zwei externe Verbindungen unter Belegung von zwei B-Kanälen gleichzeitg betrieben werden.

Es ist deshalb Aufgabe der Erfindung, Nutzinformationskanäle Endstellen flexibler zuzuordnen.

Diese Aufgabe wird durch die Lehre des Patentanspruchs 1, 8 und 12 gelöst. Vorteilhafte Ausführungen sind den Unteransprüchen zu entnehmen.

Ein besonderer Vorteil der Erfindung liegt in der Erhöhung der Teilnehmerkapazität in einem Telekommunikationsnetz ohne eine aufwendige Verlegung neuer Hauptkabel. Des weiteren sind Vorteile bei der Installation und beim Betrieb von Endstellen zu erwarten.

Im folgenden wird die Erfindung anhand eines Ausführungsbeispiels unter Zuhilfenahme einer Figur erläutert.

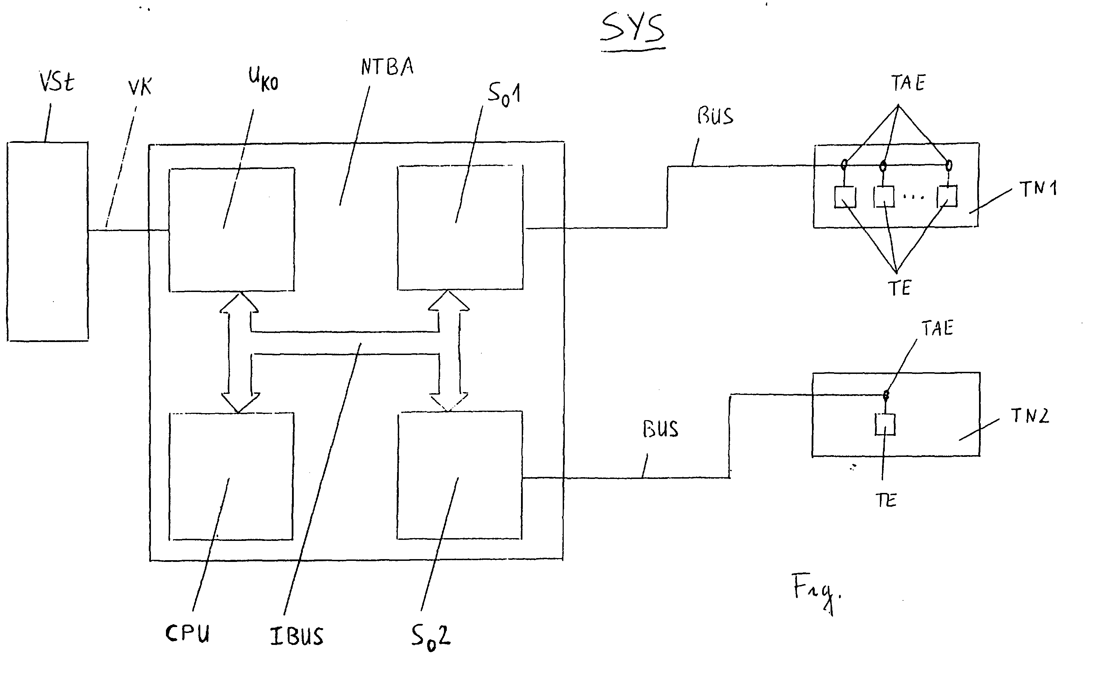

Die Figur zeigt eine schematische Darstellung eines erfindungsgemäßen Telekommunikationssystems mit einer Netzabschlußeinrichtung.

Ein Ausführungsbeispiel für das erfindungsgemäße Telekommunikatonssystem mit einer Netzabschlußeinrichtung NTBA eines dienstintegrierenden digitalen Netzes, ihre teilnehmer- und netzseitigen Verbindungen und ein Vorgang der Informationsübertragung vom dienstintegrierenden digitalen Netz zu den Endstellen und umgekehrt wird nun anhand der Figur beschrieben.

Die Netzabschlußeinrichtung NTBA beinhaltet eine U_{KO}-Schnittstelle U_{KO} für netzseitige Verbindungen, zwei S_{O}-Schnittstellen S_{O}1, S_{O}2 für teilnehmerseitige Verbindungen, eine Steuereinheit CPU und einen internen Bus IBUS. Die U_{KO}-Schnittstelle U_{KO}, die beiden S_{O}-Schnittstellen S_{O}1, S_{O}2 und die Steuereinheit CPU sind über den internen Bus IBUS miteinander verbunden. Über den internen Bus IBUS werden bidirektional Informationen übertragen.

Netzseitig ist die Netzabschlußeinrichtung NTBA über Verzweigungskabel VK und ein oder mehreren nicht dargestellten Zwischeneinrichtungen mit einer Vermittlungsstelle VSt verbunden. Die Verzweigungskabel VK können auch Hauptkabel sein.

Teilnehmerseitig ist die Netzabschlußeinrichtung NTBA mit zwei Endstellen verbunden. Jede Endstelle, d.h. jeder Teilnehmer ist über eine separate S_{O}-Schnittstelle S_{O}1; S_{O}2 mit der Netzabschlußeinrichtung NTBA verbunden. Jede Endstelle enthält eine Endstellenleitung BUS und ein oder mehrere Telekommunikationsanschlußeinheiten TAE. Die Endgeräte TE der Teilnehmer sind jeweils über die Telekommunikationsanschlußeinheit TAE und die Endstellenleitung BUS mit der jeweiligen S_{O}-Schnittstelle S_{O}1, S_{O}2 verbunden.

Die Netzabschlußeinrichtung NTBA befindet sich außerhalb der Räume der Teilnehmer TN1, TN2. Dabei kann sie von einer vom Telekommunikationsnetz unabhängigen Stromversorgung gespeist werden. Die Netzabschlußeinrichtung NTBA kann sich auch innerhalb der Räume des einen TN1 oder des anderen Teilnehmers TN2 befinden.

Bei einer Informationsübertragung vom diensteintegrierenden digitalen Netz zu den Endstellen werden die Informationen zunächst zur U_{KO}-Schnittstelle U_{KO} übertragen. Die Informationen werden im Zeitmultiplexverfahren in einer Rahmenstruktur übertragen. Die Rahmenstruktur enthält zwei B-Kanäle (64 kbit/s) und einen D-Kanal (16kbit/s). Die B-Kanäle enthalten dabei Nutzinformationen, wie z.B. Sprache, Text, Daten, Bilder. Der D-Kanal enthält Signalisierungsinformationen. Die Signalisierungsinformationen dienen u.a. dem Verbindungsaufbau und -abbau bei Verbindungen von Endstellen über das diensteintegrierende digitale Netz. In den Signalisierungsinformationen des D-Kanals wird zusätzlich eine Information über eine Aufteilung und eine Zuweisung der B-Kanäle auf die beiden Endstellen eingefügt. Dabei ist ein Bit für die Auswahl der Endstelle und ein Bit für die Zuweisung eines B-Kanals pro Endstelle vorgesehen. Die Aufteilung der B-Kanäle auf die beiden Endstellen kann z.B. durch das europäische digitale Signalisierungssystem Nr. 1 Protokoll (EDSS1-Protokoll) für den D-Kanal mittels des Dienstemerkmals Mehrfachrufnummer (MSN) realisiert werden.

Die Aufteilung der B-Kanäle wird durch die Vermittlungsstelle bestimmt. Die Vorgabe der Aufteilung der B-Kanäle ist grundsätzlich veränderbar. Ist eine Aufteilung jedoch einmal festgelegt, so bleibt sie bestehen. Die Informationen der B-Kanäle und des D-Kanals werden zur Steuereinheit CPU übertragen. Die Steuereinheit CPU ist z.B. ein Prozessor. Sie wertet die Signalisierungsinformationen des D-Kanals aus und überträgt jeder Endstelle über die jeweilige S_{O}-Schnittstelle S_{O}1; S_{O}2 nur die zugehörigen Nutz- und/oder Signalisierungsinformationen. Jede Endstelle erhält somit einen B-Kanal mit 64 kbit/s zur Nutzinformationsübertragung und im Zeitmultiplex den D-Kanal zur Signalisierungsinformationsübertragung zugewiesen. Der D-Kanal kann zusätzlich im Zeitmultiplexverfahren von einer oder von beiden Endstellen zur Übertragung paketvermittelter Daten genutzt werden.

Damit kann jede Endstelle zwei Kanäle, einen 64 kbit/s-Kanal und einen 16 kbit/s-Kanal zur simultanen Übertragung von Nutzinformationen, z.B. Sprache und Daten, nutzen.

Bei einer Informationsübertragung von den Endstellen in das diensteintegrierende digitale Netz werden die Informationen zunächst von den Endstellen über die jeweilige S_{O}-Schnittstelle S_{O}1; S_{O}2 zur Steuereinheit CPU übertragen. Die Steuereinheit CPU bündelt die teilnehmerspezifischen Informationen und überträgt sie über die U_{KO}-Schnittstelle ins diensteintegrierende digitale Netz. Die Signalisierungsinformationen und die paketvermittelten Daten der einen Endstelle und diejenigen der anderen Endstelle werden dabei im Zeitmultiplexverfahren im D-Kanal übertragen.

Die Nutzinformationen der einen Endstelle werden in dem einen B-Kanal, die Nutzinformationen der anderen Endstelle werden in dem anderen B-Kanal übertragen, die Aufteilung erfolgt dabei nach vorheriger Zuweisung durch die Vermittlungsstelle VSt.

## Patentansprüche

1. Netzabschlußeinrichtung ( NTBA ) zur Anschaltung mehrerer Endstellen ( BUS, TAE ) an ein digitales Kommunikationsnetz, mit einer netzseitigen Schnittstelle (U_{K0}), mehreren teilnehmerseitigen Schnittstellen (S₀1, S₀2) und einer Steuereinheit ( CPU ), die Mittel zum Übertragen von in Rahmen strukturierten Informationen enthält, wobei der netzseitige Rahmen mehrere Nutzinformationskanäle und einen oder mehrere Signalisierungskanäle enthält,
**dadurch gekennzeichnet**,
daß die Steuereinheit ( CPU ) geeignet ist, den Endstellen ( BUS, TAE ) jeweils nur einen Teil der netzseitig verfügbaren Nutzinformationskanäle nach fest vorgegebener Aufteilung zuzuweisen.

2. Netzabschlußeinrichtung ( NTBA ) nach Anspruch 1, dadurch gekennzeichnet, daß die Steuereinheit ( CPU ) geeignet ist eine Zusatzinformation zur Signalisierungsinformation zur Auswahl der Endstelle ( BUS, TAE ) und zur Auswahl des oder der Nutzinformationskanäle auszuwerten.

3. Netzabschlußeinrichtung (NTBA) nach Anspruch 1, dadurch gekennzeichnet, daß die Netzabschlußeinrichtung (NTBA) außerhalb der Räume der Teilnehmer angeordnet ist.

4. Netzabschlußeinrichtung (NTBA) nach Anspruch 1, dadurch gekennzeichnet, daß mindestens eine teilnehmerseitige Schnittstelle eine S_{O}-Schnittstelle eines diensteintegrierenden digtalen Netzes und die netzseitige Schnittstelle eine U-Schnittstelle eines diensteintegrierenden digitalen Netzes ist.

5. Netzabschlußeinrichtung (NTBA) nach Anspruch 4, dadurch gekennzeichnet, daß die Nutzinformationskanäle jeweils eine Übertragungskapazität von 64 kbit/s haben.

6. Netzabschlußeinrichtung (NTBA) nach Anspruch 4, dadurch gekennzeichnet, daß mindestens ein Signalisierungskanal eine Übertragungskapazität von 16 kbit/s hat.

7. Netzabschlußeinrichtung (NTBA) nach Anspruch 4, dadurch gekennzeichnet, daß über die Steuereinheit (CPU) der oder die Signalisierungskanäle von der oder den Endstellen (BUS, TAE) zusätzlich zur paketvermittelten Datenübertragung nutzbar sind.

8. Verfahren zur Zuweisung von Nutzinformationskanälen an mehrere Endstellen ( BUS, TAE), die gemeinsam über einen Netzabschluß mit einem digitalen Telekommunikationsnetz verbunden sind, in dem Rahmen strukturierte Informationen in Nutzinformationskanälen und wenigstens einem Signalisierungskanal übertragen werden, dadurch gekennzeichnet, daß bei dem den mehreren Endstellen ( BUS, TAE ) jeweils nur ein Teil der an dem Netzabschluß netzseitig verfügbaren Nutzinformationskanäle zugewiesen wird und bei dem die Zuweisung nach fest vorgegebener Aufteilung erfolgt.

9. Verfahren nach Anspruch 8, dadurch gekennzeichnet, daß die Nutzinformationskanäle über Steuereinheiten (CPU) in den Netzabschlüssen (NT) zugewiesen werden.

10. Verfahren nach Anspruch 8, dadurch gekennzeichnet, daß die Auswahl der Endstelle (BUS, TAE) und die Auswahl des oder der Nutzinformationskanäle über eine Zusatzinformation in einem Signalisierungskanal erfolgt.

## Claims

1. Network termination device (NTBA) for connecting a plurality of terminal points (BUS, TAE) to a digital communication network, having an interface (U_{KO}) on the network side, a plurality of interfaces (S_{O}1, S_{O}2) on the subscriber side and a control unit (CPU) which contains means for transmitting items of information structured in frames, the frames on the network side containing a plurality of user information channels and one or more signalling channels, characterized in that the control unit (CPU) is suitable for allotting only a portion of the user information channels available on the network side to each of the terminal points (BUS, TAE) according to a permanently specified distribution.

2. Network termination device (NTBA) according to Claim 1, characterized in that the control unit (CPU) is suitable for evaluating an item of additional information to the signalling information for the purpose of selecting the terminal point (BUS, TAE) and for the purpose of selecting the user information channel or channels.

3. Network termination device (NTBA) according to Claim 1, characterized in that the network termination device (NTBA) is disposed outside the subscriber's premises.

4. Network termination device (NTBA) according to Claim 1, characterized in that at least one interface on the subscriber side is an S_{O}-interface of an integrated services digital network and the interface on the network side is a U-interface of an integrated services digital network.

5. Network termination device (NTBA) according to Claim 4, characterized in that the user information channels each have a transmission capacity of 64 kbits/s.

6. Network termination device (NTBA) according to Claim 4, characterized in that at least one signalling channel has a transmission capacity of 16 kbit/s.

7. Network termination device (NTBA) according to Claim 4, characterized in that, via the control unit (CPU), the signalling channel or channels of the terminal point or points (BUS, TAE) can additionally be used for packet-switched data transmission.

8. Method of allotting user information channels to a plurality of terminal points (BUS, TAE) which are jointly connected via a network termination to a digital telecommunication network in which items of information structured in frames are transmitted in user information channels and at least one signalling channel, characterized in that only a portion of the user information channels available on the network side at the network termination is allotted to each of the plurality of terminal points (BUS, TAE) and in that the allotting takes place according to a permanently specified distribution.

9. Method according to Claim 8, characterized in that the user information channels are allotted via control units (CPU) in the network terminations (NT).

10. Method according to Claim 8, characterized in that the selection of the terminal point (BUS, TAE) and the selection of the user information channel or channels takes place by means of an additional item of information in a signalling channel.

## Revendications

1. Terminal de réseau (NTBA) pour la connexion d'une pluralité de postes d'abonné (BUS, TAE) à un réseau de communication numérique, avec une interface côté réseau (U_{KO}), plusieurs interfaces côté abonné (S_{O}1, S_{O}2) et une unité de commande (CPU) qui contient des moyens pour transmettre des données structurées en trames, la trame côté réseau contenant plusieurs canaux d'informations utiles et un ou plusieurs canaux de signalisation, caractérisé en ce que l'unité de commande (CPU) est capable d'affecter aux postes d'abonné (BUS, TAE) respectivement une partie uniquement des canaux d'informations utiles disponibles côté réseau selon une répartition prédéterminée fixe.

2. Terminal de réseau (NTBA) selon la revendication 1, caractérisé en ce que l'unité de commande (CPU) est capable d'évaluer une information supplémentaire à l'information de signalisation pour sélectionner le poste d'abonné (BUS, TAE) et pour sélectionner le ou les canaux d'informations utiles.

3. Terminal de réseau (NTBA) selon la revendication 1, caractérisé en ce que le terminal de réseau (NTBA) est disposé à l'extérieur des locaux des abonnés.

4. Terminal de réseau (NTBA) selon la revendication 1, caractérisé en ce qu'au moins une interface côté abonné est une interface S_{O} d'un réseau numérique à intégration de services et l'interface côté réseau est une interface U d'un réseau numérique à intégration de services.

5. Terminal de réseau (NTBA) selon la revendication 4, caractérisé en ce que les canaux d'informations utiles ont respectivement une capacité de transmission de 64 kbit/s.

6. Terminal de réseau (NTBA) selon la revendication 4, caractérisé en ce qu'au moins un canal de signalisation a une capacité de transmission de 16 kbit/s.

7. Terminal de réseau (NTBA) selon la revendication 4, caractérisé en ce que, par l'intermédiaire de l'unité de commande (CPU), le ou les canaux de signalisation peuvent en outre être utilisés par le ou les postes d'abonné (BUS, TAE) pour la transmission de données par commutation par paquets.

8. Procédé pour affecter des canaux d'informations utiles à plusieurs postes d'abonné (BUS, TAE) qui sont reliés ensemble par l'intermédiaire d'un terminal de réseau à un réseau de télécommunication numérique, dans lequel des informations structurées en trames sont transmises dans des canaux d'informations utiles et au moins un canal de signalisation, caractérisé en ce que respectivement une partie seulement des canaux d'informations utiles disponibles côté réseau au niveau du terminal de réseau est affectée à la pluralité de postes d'abonné (BUS, TAE), et dans lequel l'affectation est effectuée selon une répartition prédéterminée fixe.

9. Procédé selon la revendication 8, caractérisé en ce que les canaux d'informations utiles sont affectés par l'intermédiaire d'unités de commande (CPU) dans les terminaux de réseau (NT).

10. Procédé selon la revendication 8, caractérisé en ce que la sélection du poste d'abonné (BUS, TAE) et la sélection du ou des canaux d'informations utiles est effectuée par l'intermédiaire d'une information supplémentaire dans un canal de signalisation.
